Europäisches Patentamt

European Patent Office

Office européen des brevets

(19)

(11)  **EP 0 981 727 B1**

(12)  **FASCICULE DE BREVET EUROPEEN**

(45) Date de publication et mention
de la délivrance du brevet:
**03.03.2004   Bulletin 2004/10**

(21) Numéro de dépôt: **98924421.5**

(22) Date de dépôt: **12.05.1998**

(51) Int Cl.$^7$: **G01M 3/40**

(86) Numéro de dépôt international:
**PCT/FR1998/000945**

(87) Numéro de publication internationale:
**WO 1998/052010 (19.11.1998 Gazette 1998/46)**

(54) **PROCEDE DE DETECTION SELECTIVE DE FUITES DE LIQUIDE DANS DES CANALISATIONS INACCESSIBLES ET DISPOSITIF POUR SA MISE EN OEUVRE**

VERFAHREN UND VORRICHTUNG ZUR SELEKTIVEN LECKERFASSUNG VON FLÜSSIGKEIT IN UNZUGÄNGLICHEN ROHREN

METHOD FOR SELECTIVELY DETECTING LIQUID LEAKS IN INACCESSIBLE PIPING AND DEVICE FOR ITS IMPLEMENTATION

(84) Etats contractants désignés:
**BE CH DE ES FR GB IT LI LU**

(30) Priorité: **12.05.1997  FR 9705775**

(43) Date de publication de la demande:
**01.03.2000   Bulletin 2000/09**

(73) Titulaire: **COMPAGNIE DE DIFFUSION COMMERCIALE ET D'ASSISTANCE TECHNIQUE 23000 Guéret (FR)**

(72) Inventeurs:
• **CATONNE , Jean-Claude**
  **F-78170 La Celle Saint Cloud (FR)**
• **ERGO, Alain**
  **F-92700 Colombes (FR)**
• **SENSFELDER, Raymond**
  **F-75001 Paris (FR)**

(74) Mandataire: **Touati, Catherine et al Cabinet Plasseraud 65/67 rue de la Victoire 75440 Paris Cedex 09 (FR)**

(56) Documents cités:
**EP-A- 0 125 460        EP-A- 0 298 303**
**EP-A- 0 485 914        DE-A- 4 010 622**

EP 0 981 727 B1

## Description

L'invention a pour objet un procédé de détection sélective de fuites de liquide dans des canalisations qui sont établies en matériau non conducteur ou qui sont électriquement discontinues, ces canalisations étant inaccessibles et destinées au transport de liquides, notamment d'eau et plus particulièrement d'eau potable.

Elle vise également un dispositif propre à la mise en oeuvre du susdit procédé.

Il arrive fréquemment que les canalisations destinées au transport de liquides soient inaccessibles ; elles peuvent être ou bien enterrées dans le sol, ou bien immergées dans l'eau d'un lac, d'un étang, dans la mer, ou bien encore dissimulées sous un plancher, dans une cloison ou dans un mur. Lorsqu'il s'agit de réparer une fuite, l'accès à de telles canalisations nécessite des opérations de dégagement qui sont coûteuses. Il est donc souhaitable de pouvoir détecter l'emplacement de telles fuites pour limiter au maximum les opérations de dégagement en question.

On rappelle que, dans le cas des canalisations enterrées, établies en un matériau conducteur de l'électricité, la protection vis à vis de la corrosion causée par le milieu environnant est assurée par une combinaison de mesures comprenant:

- une protection passive constituée par un revêtement électriquement isolant appliqué sur la surface externe desdites canalisations,
- une protection cathodique par courant imposé le long desdites canalisations.

Le courant continu associé à un système de protection cathodique engendre un gradient de potentiel autour de la canalisation. Dans le sens transversal à l'axe de la canalisation, ce gradient est d'autant plus concentré à proximité de la canalisation que l'isolement par rapport au sol est élevé et uniforme. Dans le sens longitudinal, en l'absence de défaut dans le revêtement, le gradient de potentiel mesuré entre deux points faiblement espacés (environ 1 à 2 m) sera quasiment inexistant.

En revanche, en présence d'un défaut ce gradient sera perturbé; il sera maximum à l'endroit du défaut.

Or, tout revêtement quel qu'il soit, comporte un certain nombre de défauts et se dégrade au cours du temps sous les effets du vieillissement de ses constituants, des agressions chimiques, des contraintes mécaniques exercées par le sol et du frottement résultant de la dilatation de la canalisation. A niveau de protection constant, l'intensité débitée par le système de protection cathodique augmente donc afin de compenser cette dégradation, notamment aux points défectueux. Sur certains points particulièrement endommagés, il peut arriver cependant que le niveau de protection requis ne soit pas atteint. De tels défauts doivent être réparés. Pour éviter de devoir rendre accessibles de trop grandes longueurs de canalisation en vue de la réparation de ces défauts, il est souhaitable de pouvoir les localiser avec précision.

On connaît des procédés de détection de tels défauts générés sur le revêtement des canalisations en matériau conducteur protégées par ledit revêtement et protégées cathodiquement. Ces procédés mettent à profit la modification du gradient à l'emplacement d'un défaut du revêtement.

Parmi ces procédés, on peut citer celui dit de PEARSON qui consiste à appliquer, entre la canalisation conductrice et le terrain dans lequel elle est enterrée, un courant alternatif de fréquence audible et à suivre le long de la canalisation les modifications du son transmis, largement amplifié.

Dans la demande de brevet EP-A-485 914, un tel procédé est appliqué en utilisant un dispositif permettant de rendre la canalisation électriquement conductrice sur toute sa longueur afin de pouvoir y détecter une fuite ou un défaut éventuel.

Des techniques analogues sont connues des documents EP-A-125 460 et DE-A-40 10 622.

Un second procédé de mesure des gradients continus de potentiel à faibles intervalles consiste à imposer, entre la canalisation conductrice et le sol dans lequel la canalisation est enterrée, une tension pulsée et à détecter visuellement les oscillations d'un galvanomètre relié à deux sondes potentiométriques que l'on déplace simultanément sur le terrain au-dessus de ladite canalisation le long de son axe longitudinal.

Il arrive fréquemment que les terrains dans lesquels sont enterrées lesdites canalisations soient parcourus par des courants vagabonds continus et/ou alternatifs de diverses origines.

Or, les procédés de détection actuellement utilisés peuvent être perturbés par ces courants vagabonds. En effet, il est fréquent que des courants vagabonds soient analysés de manière erronée comme étant des défauts de revêtement ; l'équipe de réparation procède alors tout à fait inutilement à une excavation de la canalisation.

De plus, ces procédés ne permettent pas de distinguer, parmi les défauts du revêtement qu'ils localisent, les éventuelles fuites que présenteraient ces canalisations . Et enfin et surtout ils ne peuvent être utilisés que pour des canalisations réalisées en matériau conducteur protégées au moins extérieurement par un revêtement ; or, de nombreuses canalisations sont établies en matériau non conducteur ou sont électriquement discontinues.

En effet, on utilise de plus en plus souvent, lorsque les pressions imposées au liquide le permettent, des canalisations en matériau isolant, notamment en poly(chlorure de vinyle).

Ces canalisations en poly(chlorure de vinyle), et plus généralement toutes les canalisations quel que soit leur matériau constitutif, peuvent présenter des perforations donnant naissance à des fuites ; ces perforations sont souvent dues à des défauts de raccordement entre deux tubes consécutifs constitutifs d'une canalisation donnée, ou à des blessures occasionnées soit lors de la mise en fouille ou de la remise en état du terrain par des pierres ou des branches blessantes amenées au contact de la canalisation, soit par la pénétration de corps étrangers, soit par la corrosion, la dégradation chimique et autres.

Pour limiter le coût de l'entretien de l'installation, il est donc primordial de savoir localiser les fuites avec précision, ce qui permet de ne dégager la canalisation qu'à l'endroit de ces fuites, en vue des colmatages correspondants.

Il existait donc un besoin aigu de trouver un procédé de localisation précise par détection sélective des fuites générées sur des canalisations non accessibles qui sont établies en matériau non conducteur ou qui sont électriquement discontinues.

Et il est du mérite des inventeurs d'avoir trouvé qu'il est possible de détecter sélectivement et de localiser avec précision les fuites générées sur des canalisations qui sont établies en matériau non conducteur ou qui sont électriquement discontinues, ces canalisations étant inaccessibles et destinées au transport de liquides grâce à un procédé caractérisé par le fait qu' :

a) on applique entre le liquide transporté ou mis en place et le milieu rendant ladite canalisation inaccessible une tension électrique continue à champ pulsé,

b) on déplace par pas successifs sur le milieu rendant ladite canalisation inaccessible en suivant approximativement l'axe longitudinal de ladite canalisation, une bi-sonde potentiométrique constituée de deux sondes potentiométriques avantageusement identiques, maintenues à distance invariable l'une de l'autre et qui sont à chaque pas mises au contact du milieu rendant ladite canalisation inaccessible, et

c) on observe et/ou on mesure à chaque position successive de la bi-sonde le signal électrique émis entre les deux sondes qui la constituent,

une fuite donnée étant située entre les deux positions successives de la bi-sonde entre lesquelles on observe une inversion du signal émis.

L'invention pourra être bien comprise à l'aide du complément de description qui suit et des exemples non limitatifs qui illustrent des modes de réalisation avantageux.

Pour détecter sélectivement et pour localiser avec précision les fuites comportées par une canalisation établie en matériau non conducteur ou qui est électriquement discontinue, cette canalisation étant inaccessible et destinée au transport de liquides, notamment d'eau et plus particulièrement d'eau potable, conformément à l'invention on déplace par pas successifs et dans le sens de l'axe longitudinal de la canalisation une bi-sonde potentiométrique mise en contact en chaque position successive avec le milieu rendant la canalisation inaccessible et on mesure dans chacune de ces positions successives le signal électrique émis entre les deux sondes constituant la bi-sonde potentiométrique, une tension électrique continue à champ pulsé étant établie par ailleurs entre le liquide transporté et le milieu rendant la canalisation inaccessible.

La canalisation étant constituée par la réunion de tubes unitaires élémentaires, la longueur des pas successifs dont on déplace la bi-sonde est comprise entre une demi-longueur et une longueur de tube, de préférence entre un tiers et une longueur de tube, et plus préférentiellement encore entre un quart de longueur de tube et une longueur de tube.

Les tubes classiquement utilisés ont une longueur d'environ 6 m.

De préférence, chaque pas est au moins égal à un multiple de la distance séparant les deux sondes.

Pour obtenir des mesures aussi précises que possible, il est souhaitable de choisir un pas de déplacement le plus court possible.

Le choix du pas de déplacement de la bi-sonde et de l'écartement des deux sondes qui la constituent doit donc être fait compte tenu, d'une part de la longueur du tube à partir duquel sont constituées les canalisations et, d'autre part de la précision souhaitée.

Entre le liquide transporté et le milieu rendant la canalisation inaccessible, on applique une tension électrique continue à champ pulsé, comprise entre environ 3 et environ 96 V, de préférence entre 3 et 72 V, et plus préférentiellement encore entre 6 et 48 V.

Cette tension peut être appliquée à l'aide d'un générateur de courant continu auquel on associe un interrupteur périodique symétrique ou asymétrique de façon à obtenir une tension à champ pulsé.

Les inventeurs ont trouvé que, de façon surprenante et inattendue, le procédé conforme à l'invention pouvait même être appliqué à des canalisations établies en matériau non conducteur ou qui sont électriquement discontinues.

Parmi les canalisations classiquement utilisées, on peut citer les canalisations à âme métallique intérieurement et/ou extérieurement recouvertes d'un revêtement de protection, les canalisations établies en matériau électriquement isolant et les canalisations en ciment.

A titre d'exemples de matériaux constitutifs du revêtement de protection pour les canalisations à âme métallique intérieurement et/ou extérieurement recouvertes, on peut citer le ciment, le bitume, le béton, la fonte vitrifiée, les matériaux organiques.

Ces matériaux protecteurs sont de qualité alimentaire notamment lorsque les canalisations dont il s'agit sont destinées au transport d'eau potable.

Comme matériau constitutif des canalisations classiquement utilisé, on peut citer notamment le poly(chlorure de vinyle), le fibro-ciment, la fonte, le béton et l'acier.

Le procédé selon l'invention peut être appliqué à toute canalisation transportant un liquide quel que soit le liquide transporté.

Pour obtenir des résultats directement exploitables, il peut être nécessaire d'augmenter la conductibilité du liquide transporté. Pour ce faire, on peut ajouter dans le liquide transporté, avant d'effectuer la détection, des sels électriquement conducteurs, par exemple du chlorure de sodium, de l'eau de mer ou tout autre électrolyte tel que du silicate de sodium; il est également possible de vidanger la canalisation et d'y introduire un liquide dont la conductibilité électrique est connue comme étant suffisamment élevée, par exemple une saumure ou de l'eau de mer.

Selon un mode de réalisation préférentiel du procédé conforme à l'invention, et après avoir procédé à une première détermination de la position d'une fuite par:

a) application entre le liquide transporté ou mis en place et le milieu rendant ladite canalisation inaccessible d'une tension électrique continue à champ pulsé,

b) déplacement par pas successifs sur le milieu rendant ladite canalisation inaccessible en suivant approximativement l'axe longitudinal de ladite canalisation, d'une bi-sonde potentiométrique constituée de deux sondes potentiométriques avantageusement identiques, maintenues à distance invariable l'une de l'autre et qui sont à chaque pas mises au contact du milieu rendant ladite canalisation inaccessible, et

c) observation et/ou mesure à chaque position successive de la bi-sonde du signal électrique émis entre les deux sondes qui la constituent,
la fuite en question étant située entre les deux positions successives de la bi-sonde entre lesquelles une inversion du signal émis a été observée, conformément à l'invention

d) on dissocie les deux sondes constituant la bisonde en maintenant l'une d'elles fixe dans une position précédant l'inversion du signal et en amenant l'autre dans une position proche de celle qu'elle occupait après l'inversion du signal;

e) on déplace par pas successifs l'une des deux sondes, qui est donc mobile, en direction de l'autre, cette dernière restant immobile et on observe et/ou on mesure à chaque position successive de la sonde mobile le signal émis entre les deux sondes,

f) on fixe la sonde mobile dans une position qui précède l'observation d'un signal maximum,

g) on déplace par pas successifs la sonde précédemment maintenue fixe en direction de la sonde fixe précédemment mobile et on observe et/ou on mesure à chaque position successive de cette sonde le signal émis qui passe par un signal nul ou quasi nul,

h) éventuellement, on ramène la sonde qui était mobile à l'étape g) à proximité de la sonde fixe puis on l'éloigne de la sonde fixe par pas successifs et on observe et/ou on mesure à chaque position successive de la sonde mobile le signal émis qui passe par un signal nul lorsque les deux sondes sont à égale distance de la fuite.

La détermination précise qui consiste à rapprocher l'une vers l'autre chacune des deux sondes et qui est décrite précédemment dans les étapes e) à g), comporte deux déplacements relatifs. Cependant, elle peut ne comporter qu'un seul déplacement relatif lorsque le premier déplacement est opéré sur celle des deux sondes dont le rapprochement par rapport à l'autre conduit à la détection d'un signal nul ou quasi nul, étant donné que dans ce cas la fuite est positionnée à égale distance de chacune des deux sondes lorsque celles-ci sont dans la position correspondant au signal nul ou quasi nul.

Lorsque l'on a détecté la fuite dans le sens de l'axe longitudinal de la canalisation, on peut ensuite procéder de la même façon en déplaçant la bi-sonde potentiométrique au-dessus de la fuite détectée mais selon l'axe transversal de la canalisation. Ainsi, les déplacements successifs de la sonde permettront par approximations successives d'obtenir une localisation précise de la fuite.

Pour obtenir cette détection selon l'axe transversal, on recommence les étapes e) à g) et éventuellement l'étape h) en plaçant chaque sonde à égale distance de part et d'autre de la canalisation.

Le pas de déplacement des sondes l'une par rapport à l'autre, utilisé dans les étapes e) à g), est compris entre environ 0,25 et environ 0,50 m, de préférence entre environ 0,10 et environ 0,20 m.

Pour obtenir des mesures encore plus précises, il convient de diminuer le pas de déplacement. Le choix du pas de déplacement de la bi-sonde doit être fait compte tenu du diamètre de la canalisation et de la précision souhaitée.

Selon le procédé de l'invention, le signal électrique émis par la fuite et détecté par la bi-sonde est visualisé à l'aide, par exemple, d'un galvanomètre connecté entre les deux sondes potentiométriques qui la constituent.

Le procédé selon l'invention est illustré par les figures 1 à 5d dans lesquelles :

- la figure 1 est une représentation schématique d'une canalisation enterrée, le long de laquelle est mis en oeuvre le procédé selon l'invention ;
- la figure 2 montre schématiquement en vue de dessus d'une part une canalisation soumise à un champ électrique présentant une fuite et d'autre part les équipotentielles dues à la fuite,
- la figure 3 est une coupe longitudinale selon III-III' figure 2, montrant la bi-sonde potentiométrique en trois points A, B et C situés le long de la canalisation,les points A et C étant à peu près symétriques par rapport à B, le point B étant au niveau de la fuite 11,
- les figures 4a à 4d, et 5a à 5d montrent à plus grande échelle la figure 3 lorsque l'une des sondes de la bi-sonde devient mobile.

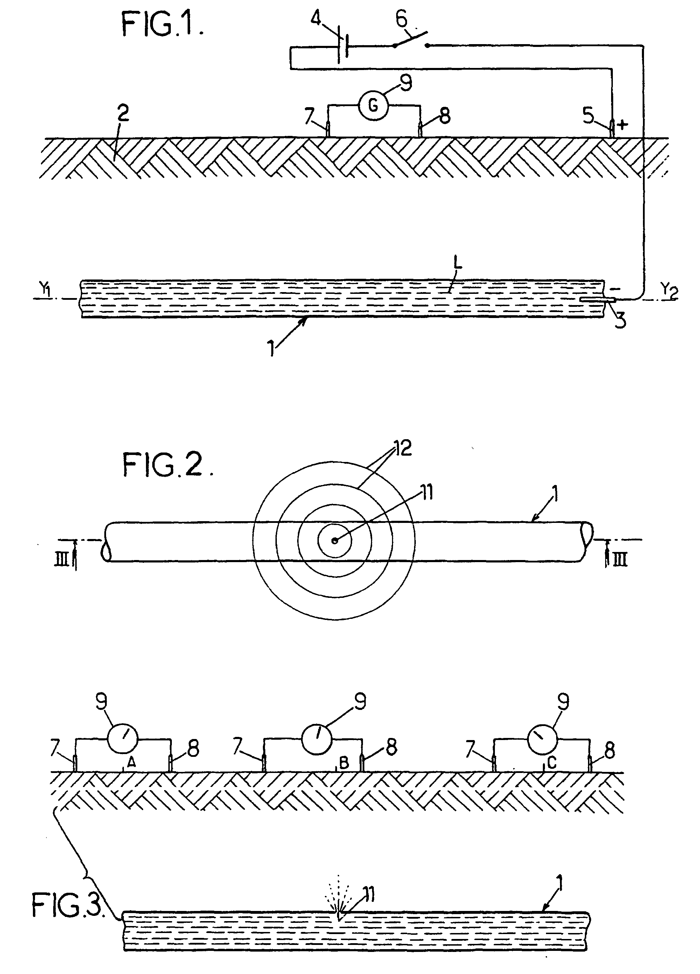

Sur la figure 1, on a représenté une canalisation 1 d'axe $Y_1Y_2$ enterrée dans le sol 2 et le long de laquelle on met en oeuvre le procédé conforme à l'invention. Une première électrode 3 reliée à la borne négative d'un générateur 4 est maintenue à l'intérieur de la canalisation 1 remplie de liquide L, avantageusement suivant l'axe de cette dernière. Une deuxième électrode 5 qui est reliée à la borne positive du générateur 4 est enfoncée dans le sol 2 à proximité de la canalisation 1. On dispose un interrupteur 6 dans le circuit reliant le générateur 4 aux électrodes 3 et 5. Deux sondes potentiométriques 7 et 8 reliées entre elles par exemple par l'intermédiaire d'un galvanomètre 9 et constituant une bi-sonde, sont disposées sur le sol et en contact avec ce dernier au-dessus de l'axe longitudinal de la canalisation 1.

Pour mettre en oeuvre le procédé selon l'invention, on déplace le long de l'axe $Y_1Y_2$ de la canalisation 1 les deux sondes 7 et 8 dont l'écartement reste fixe et on visualise ou on enregistre la position de l'aiguille du galvanomètre 9 à chaque position.

Le principe de ce procédé est illustré par la figure 2. Sur cette figure on a représenté une canalisation 1 qui présente une perforation 11. Lorsqu'un champ électrique est appliqué entre le liquide transporté par la canalisation et le sol dans lequel ladite canalisation est enterrée, il apparaît des équipotentielles 12 concentriques autour de la perforation 11.

Comme illustré par la figure 3, on déplace le long de l'axe longitudinal de la canalisation 1, la bi-sonde potentiométrique successivement d'une position A vers une position C en passant par une position B ; on observe sur le galvanomètre 9 le signal électrique émis à chaque position entre les deux sondes 7 et 8 constitutives de la bi-sonde.

A la position A, on constate une déviation de l'aiguille par exemple vers la droite. A la position B, les sondes 7 et 8 sont situées de part et d'autre de la perforation 11 mais non équidistantes par rapport à celle-ci et une plus forte déviation que celle constatée pour A est observée sur le galvanomètre. A la position C, la déviation observée est inverse de celle observée à la position A.

Dans la pratique, les mesures sont effectuées en déplaçant pas à pas la bi-sonde le long de la canalisation 1. On observe un signal électrique de plus en plus intense au fur et à mesure que la bi-sonde s'approche de la perforation. Au moment où les sondes se trouvent de part et d'autre de la perforation mais non équidistantes par rapport à celle-ci, c'est à dire sur deux lignes équipotentielles différentes(position B de la figure 3), le signal tend à diminuer étant donné qu'une différence de potentiel plus faible existe entre les deux sondes en ce point précis de la canalisation. Lorsque la bisonde est en position C le signal est de même ordre que celui observé en A mais inversé ; et il diminue d'amplitude au fur et à mesure que l'on s'éloigne de la perforation 11. La perforation est donc située entre les deux positions successives de la bi-sonde pour lesquelles le signal observé a été inversé.

Pour obtenir une localisation plus précise de la perforation 11, on place l'une des deux sondes de la bi-sonde dans une position précédant l'inversion du signal et on place l'autre sonde dans une position proche de celle où elle se trouvait après l'inversion du signal.

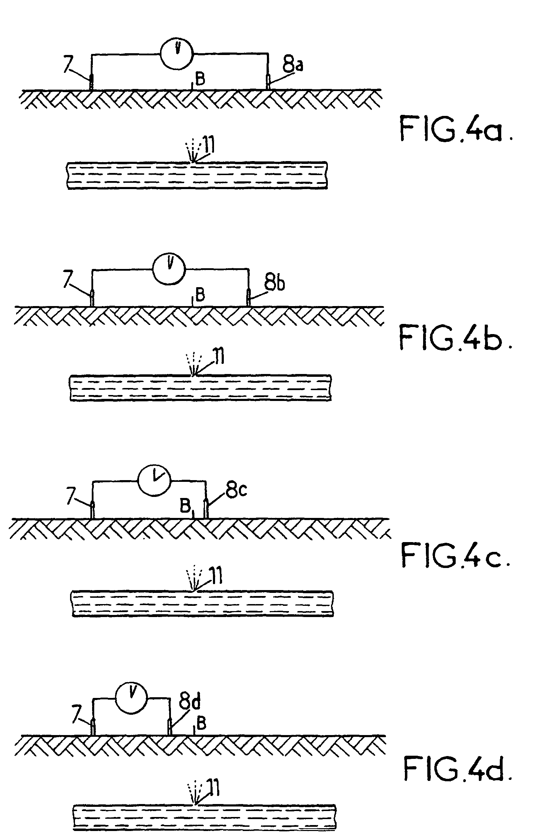

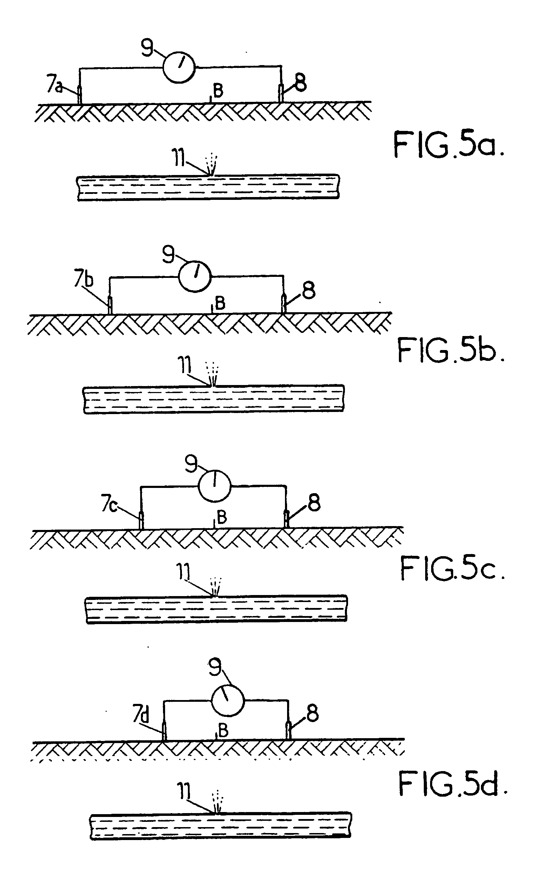

Puis, comme illustré par les figures 4a à 4d et 5a à 5d, on immobilise l'une des deux sondes et on en rapproche l'autre par pas successifs tout en observant à chaque pas le sianal émis aux bornes du galvanomètre ; on fixe ensuite la sonde préalablement mobile et on en rapproche l'autre également par pas successifs.

Plus précisément, lorsque la bi-sonde se trouve en position B, on fixe la sonde 7 ; la sonde 8 est alors dans la position désignée par 8a ; une faible déviation est alors observée sur le galvanomètre 9. On rapproche alors la sonde 8 vers la sonde 7, pour l'amener à la position désignée par 8b (figure 4b) ; on observe alors une déviation de l'aiguille du galvanomètre vers la droite ; puis on déplace la sonde mobile à la position désignée par 8c (figure 4c), la déviation de l'aiguille vers la droite étant encore plus importante ; on déplace à nouveau la sonde mobile jusqu'à la position désignée par 8d (figure 4d) et on observe une déviation vers la droite inférieure à la précédente. Entre les positions désignées par 8b et 8d, le signal est donc passé par un maximum qui indique la proximité de la perforation.

On ramène alors la sonde 8 à une position proche de celle où elle se trouvait avant le maximum (figure 5a), c'est à dire en une position proche de la position 8b de la figure 4b. On déplace ensuite la sonde 7 vers la sonde 8.

Lorsque la sonde 7 se trouve à la position désignée par 7b de la figure 5b, une faible oscillation est observée sur le galvanomètre 9. On déplace à nouveau la sonde 7 et on l'amène à la position désignée par 7c de la figure 5c; on n'observe pratiquement aucune oscillation de l'aiguille du galvanomètre. On déplace la sonde 7 vers la position désignée par 7d de la figure 5d et on observe une oscillation inversée par rapport à celle de la figure 5b. Ainsi, la perforation est située au centre de la distance séparant les positions 7c et 8 de la figure 5c où l'oscillation nulle ou quasi nulle du signal a été observée.

Par les opérations et mesures successives ainsi décrites, la position de la perforation est déterminée avec précision le long de l'axe longitudinal de la canalisation ; il est alors possible d'utiliser les mêmes opérations sur l'axe transversal de la canalisation passant par le point déterminé. La position de la perforation est alors déterminée avec exactitude.

L'invention a également pour objet un dispositif selon la présente revendication 10.

Suivant un mode de réalisation avantageux, ce dispositif conforme à l'invention comprend au moins une anode destinée à être plantée dans le sol, au moins une cathode destinée à être maintenue à l'intérieur de ladite canalisation, avantageusement à proximité et parallèlement à son axe longitudinal, un générateur de courant continu alimentant les différentes électrodes, ledit générateur étant lui-même relié à un interrupteur, étant entendu qu'à ce système, qui permet d'appliquer une tension pulsée au liquide transporté ou mis en place, on associe un système mobile de mesure du signal émis par une fuite qui comprend deux sondes potentiométriques constituant une bi-sonde et disposées l'une de l'autre à une distance pouvant être invariable et aux bornes desquelles est connecté un appareil de visualisation et/ou de mesure du signal électrique émis entre les deux sondes.

L'interrupteur utilisé en combinaison avec le générateur permet d'obtenir une tension pulsée et peut être constitué par un interrupteur symétrique ou asymétrique.

Le système de visualisation est de préférence un galvanomètre.

L'écartement entre les deux sondes potentiométriques est compris entre environ 1 et environ 3 m, de préférence entre environ 1,5 et environ 2,5 m.

La tension du générateur est comprise entre environ 2 et environ 96 V, de préférence entre 4 et 72 V, plus préférentiellement encore entre 6 et 48 V.

## EXEMPLE 1

### Corrélation entre ddp appliquée et gradient mesuré

On opère sur un tronçon de canalisation en poly(chlorure de vinyle) (PVC) de 32 mm de diamètre et de 26 m de long, servant à une alimentation en eau brute. Le tronçon est constitué de tubes de 2 m de longueur nominale, réunis par collage et enfouis dans un terrain de remblai, à une profondeur d'environ 50 cm. Des essais d'étanchéité montrent que ce tronçon présente une fuite, dont on cherche à localiser l'emplacement à l'aide du procédé de détection électrique sous champ pulsé, objet de l'invention.

On vidange la canalisation de son contenu d'eau brute, puis on la remplit avec une solution de chlorure de sodium, diluée à 1 % en masse, ladite solution servant également d'appoint pour maintenir le tronçon à niveau constant afin d'équilibrer le débit de fuite.

On implante une première électrode constituée par un fil d'acier de 3 mm de diamètre et 20 cm de longueur dans une des extrémités du tronçon suivant l'axe de ce dernier et on le relie au pôle négatif d'un générateur de courant continu équipé d'un interrupteur périodique asymétrique (1/3 s enclenché, 2/3 s déclenché). Une deuxième électrode, également en acier, est implantée dans le terrain, à une cinquantaine de mètres de distance du tronçon et est reliée au pôle positif du générateur. La tension appliquée entre les deux électrodes constituant une anode et une cathode est de 40 V.

La recherche pas-à-pas de la fuite est pratiquée par mise en oeuvre du procédé selon l'invention.

On a recours à une bi-sonde potentiométrique constituée par deux sondes consistant chacune en une tige de cuivre plongée dans une solution saturée de $CuSO_4$. L'écartement entre les deux sondes constituant la bi-sonde est fixé à 2 m ; un galvanomètre est branché entre ces deux sondes. On détecte un épicentre, c'est à dire une inversion du signal émis entre les deux sondes et on le localise à 24,50 m de la cathode.

Après avoir pratiqué une excavation à l'endroit de l'épicentre détecté selon le procédé, objet de la présente invention, on constate la présence d'une fuite à la jonction entre deux tubes collés.

## EXEMPLE 2

Un tronçon de canalisation d'adduction d'eau, constitué par des tubes de PVC collés (longueur unitaire 6 m, diamètre 150 mm) a fait l'objet d'une recherche de fuites selon le procédé électrique sous champ pulsé, conforme à l'invention ; on a recours à une bi-sonde potentiométrique déplacée le long du tronçon, sous une différence de potentiel imposée entre la cathode et l'anode égale à 49,6 V. La longueur totale du tronçon est de 600 m. Le tronçon, préalablement rempli avec une saumure de NaCl de concentration moyenne égale à 0,7 % en masse, est maintenu sous une pression d'environ 9 bars.

Un seul épicentre caractéristique est détecté sur ce tronçon, à environ 165 m de l'extrémité prise comme origine. La présence d'un léger suintement, caractéristique d'une très légère fuite, est confirmé après excavation.

En modifiant la valeur de la tension aux bornes et en suivant l'intensité du courant continu circulant entre l'anode et la cathode, on a déterminé la résistance ohmique équivalente des deux éléments de tronçons, de part et d'autre de l'épicentre. On a obtenu les valeurs, réunies dans le tableau I, d'une part en branchant la cathode à l'extrémité d'origine, d'autre part en la branchant à l'extrémité opposée. Par « extrémité d'origine », on entend l'extrémité à partir de laquelle commence le déplacement de la bi-sonde potentiométrique, approximativement le long de l'axe longitudinal de la canalisation.

TABLEAU I

| Position de la cathode | Résistance équivalente (k$\Omega$) |
|---|---|
| Extrémité d'origine | 28,2 |
| Extrémité opposée | 10,8 |

On vérifie que la position de l'épicentre par rapport à l'extrémité d'origine est conforme au calcul théorique. En effet, c'est la fuite détectée sur ce tronçon de canalisation en PVC qui assure la continuité électrique entre la cathode, mise au contact de l'électrolyte à l'une ou l'autre des deux extrémités du tronçon, et l'anode, implantée dans le terrain adjacent à l'extérieur du tronçon. Sous une pression donnée et pour un débit de fuite négligeable, la quantité d'électrolyte est constante. Les dimensions du tronçon ne changent pas. On peut donc appliquer les relations suivantes :

$$R_1 = p \times \frac{L_1}{S}$$

$$R_2 = p \times \frac{600 - L_1}{S}$$

- p : résistivité de la solution interne ;
- S : section du tronçon de 600 m de longueur totale ;
- $L_1$ distance entre l'extrémité d'origine et l'épicentre de la fuite détectée selon le procédé de l'invention.

En divisant membre à membre :

$$\frac{R_1}{R_2} = \frac{L_1}{600 - L_1} = \frac{10,8}{28,2}$$

On en déduit $L_1$ = 166 m.

La position théorique de la fuite est donc en parfaite adéquation avec l'expérience.

## EXEMPLE 3

Un tronçon de canalisation d'adduction d'eau en tubes unitaires en PVC (250 mm de diamètre et 6 m de longueur), d'une longueur de 672 m, a fait l'objet d'une détection de fuites selon le procédé conforme à l'invention. Ce tronçon présentait un coude métallique, intérieurement revêtu par une peinture époxy et situé à une distance de 370 m de l'extrémité du tronçon prise comme origine.

Dans un premier temps, le tronçon a été rempli de saumure NaCl à 2 % en masse, puis maintenu sous une pression constante de 2 bars. Une cathode a été implantée dans la canalisation, à l'extrémité d'origine, puis polarisée sous 49,6 V par rapport à une anode implantée dans le terrain adjacent. La détection, effectuée sous champ pulsé, à l'aide d'une bi-sonde Cu/CuSO$_4$ conformément à l'invention, ne révèle la présence d'aucun épicentre autre que celui du coude. La pression reste stable, ce qui signifie qu'il n'y a pas de fuite. Par conséquent, puisque mis à part le point en question, à savoir le coude, il y a absence de signal épicentrique, le procédé conforme à l'invention montre que, sous une pression de 2 bars, aucune fuite n'affectant le tronçon, le revêtement interne du coude est défectueux.

Le coude joue donc un rôle de "fuite virtuelle" et une série de mesures effectuées dans les conditions du procédé conforme à l'invention permet de comparer les distances théorique et pratique par rapport à l'extrémité d'origine.

Les valeurs obtenues sont réunies dans le tableau II.

TABLEAU II

| Position de la cathode | Résistance équivalente (kΩ) |
|---|---|
| Extrémité d'origine | 2,69 |
| Extrémité opposée | 2,79 |

Un calcul analogue à celui qui a été fait dans l'exemple précédent conduit à estimer la distance coude-origine à environ 345 m et à 340 m environ d'après les plans de pose.

La pression a ensuite été augmentée jusqu'à 9 bars et la détection reprise. Le rôle de "fuite virtuelle" joué par le coude a été confirmé, mais un épicentre supplémentaire a été détecté à une distance d'environ 150 m de l'origine : une fuite, non détectée sous 2 bars est donc détectée sous 9 bars.

Les mesures, momentanément suspendues, ont été reprises après un violent orage, lequel a largement contribué à humidifier l'ensemble du terrain adjacent et des infrastructures telles que le béton d'enrobement du coude. On a imposé une polarisation de 49,7 V entre la cathode et l'anode après avoir respectivement implanté la cathode à l'extrémité du tronçon choisie comme origine, puis à l'extrémité opposée. On a déterminé la valeur des gradients de potentiel déterminés aux niveaux des épicentres du coude et de la fuite ; pour chaque cas traité, on a calculé la valeur du produit de la longueur L par le gradient.

Les valeurs obtenues sont réunies dans le tableau III.

TABLEAU III

| Position de la cathode | | Extrémité origine | Extrémité opposée |
|---|---|---|---|
| Coude | distance | 345 m | 327 m |
| | gradient | 510 mV/m | 530 mV/m |
| | L.grad (V) | 176 V/m | 173 V/m |
| Fuite (sous 9 bars) | distance | 150 m | 522 m |
| | gradient | 237 μV/m | 68 μV/m |
| | L.grad (V) | 35,7 mV | 35,5 mV |

Les résultats expérimentaux, tirés des mesures faites à la surface du sol à partir des épicentres respectifs, confirment que le produit du gradient de potentiel par la distance entre la cathode et l'épicentre est une constante, dont la valeur est indépendante de l'extrémité à partir de laquelle on branche la cathode.

En effet, la différence de potentiel, notée V, appliquée entre l'anode et la cathode est définie par l'équation suivante :

$$V = \rho \times \frac{L_1}{S} \times I_1$$

dans laquelle :

- $\rho$ représente la résistivité de la solution interne du tronçon,
- $L_1$ représente la distance entre la cathode et la fuite,
- S représente la section interne du tronçon,
- et $I_1$ représente l'intensité de fuite débitée dans le tronçon.

Vu du sol et au niveau de cette fuite, le gradient de potentiel, noté grad($V_1$), mesuré avec la bisonde est déterminé par la formule :

$$\text{grad}(V_1) = \rho_1 \times J_1$$

dans laquelle :

- $\rho_1$ représente la résistivité du terrain près de la fuite,
- $J_1$ représente la densité de courant débitée par la fuite dans le terrain.

Comme le flux de fuite est proportionnel à la densité de courant dans le tronçon, $J_1$ vérifie l'équation suivante :

$$J_1 = k \times I_{1/}S,$$

avec k : coefficient de proportionnalité.

Ceci entraîne que :

$$L_1 \times \text{grad}(V_1) = \rho_{1/}\rho \times k \times V$$

et prouve donc que sous une différence de potentiel donnée, le produit du gradient de potentiel par la distance entre la cathode et l'épicentre de la fuite est constant et indépendant de l'extrémité choisie pour brancher la cathode.

D'autre part, les résultats montren que, sous une pression de 9 bars appliquée à l'intérieur du tronçon, une fuite peut être localisée en dépit d'un gradient environ 5000 fois plus faible que celui d'un coude situé à une distance de moins de 200 m.

## Revendications

**1.**  Procédé de détection sélective et de localisation de fuites générées sur des canalisations (1) qui sont établies en matériau non conducteur ou qui sont électriquement discontinues, ces canalisations étant inaccessibles et destinées au transport de liquides (L), **caractérisé par le fait qu'**:

a) on applique entre le liquide transporté ou mis en place et le milieu (2) rendant ladite canalisation inaccessible une tension électrique continue à champ pulsé,

b) on déplace par pas successifs sur le milieu rendant ladite canalisation inaccessible en suivant approximativement l'axe longitudinal de ladite canalisation (1) une bi-sonde potentiométrique constituée de deux sondes (7,8) potentiométriques avantageusement identiques, maintenues à distance invariable l'une de l'autre et qui sont à chaque pas mises au contact du milieu rendant ladite canalisation inaccessible, et

c) on observe et/ou on mesure à chaque position successive de la bi-sonde le signal électrique émis entre les deux sondes qui la constituent,

une fuite donnée étant située entre les deux positions successives de la bi-sonde entre lesquelles on observe une inversion du signal émis.

**2.**  Procédé selon la revendication 1, **caractérisé par le fait que**, connaissant les positions de la bi-sonde entre lesquelles il se produit une inversion du signal :

d) on dissocie les deux sondes (7,8) constituant la bi-sonde en maintenant l'une d'elles fixe dans une position précédant l'inversion du signal et en maintenant l'autre dans une position proche de celle qu'elle occupait après l'inversion du signal;

e) on déplace par pas successifs l'une des deux sondes qui est donc mobile en direction de l'autre, cette dernière restant immobile et on observe et/ou on mesure à chaque position successive de la sonde mobile le signal émis entre les deux sondes,

f) on fixe la sonde mobile dans la position qui précède l'observation d'un signal maximum,

g) on déplace par pas successifs la sonde précédemment maintenue fixe en direction de la sonde fixe précédemment mobile et on observe et/ou on mesure à chaque position successive de cette sonde le signal émis qui passe par un signal nul ou quasi nul,

h) éventuellement, on ramène la sonde qui était mobile à l'étape g) à proximité de la sonde fixe puis on l'éloigne de la sonde fixe par pas successifs et on observe et/ou on mesure à chaque position successive de la sonde mobile le signal émis qui passe par un signal nul lorsque les deux sondes sont à égale distance de la fuite.

**3.** Procédé selon l'une des revendications 1 à 2, **caractérisé par le fait que** les étapes e) à g) et/ou l'étape h) sont reproduites sur l'axe transversal de la canalisation, les deux sondes constitutives de la bi-sonde étant au départ placées à égale distance de part et d'autre de ladite canalisation.

**4.** Procédé selon l'une des revendications 1 à 3, **caractérisé par le fait que** la bi-sonde est déplacée par pas successifs dont la longueur est comprise entre une demi-longueur et une longueur de tube unitaire, de préférence entre un tiers et une longueur de tube unitaire, et plus préférentiellement encore entre un quart et une longueur de tube unitaire.

**5.** Procédé selon l'une des revendications 1 à 4, **caractérisé par le fait que** la tension électrique établie entre le liquide transporté ou mis en place et le milieu rendant la canalisation inaccessible est comprise entre environ 2 et environ 96 V, de préférence entre environ 4 et environ 72 V, et plus préférentiellement encore entre environ 6 et environ 48 V.

**6.** Procédé selon l'une des revendications 1 à 5, **caractérisé par le fait qu'**on applique la tension à champ pulsé à l'aide d'un générateur de courant continu auquel est associé un interrupteur périodique symétrique ou asymétrique.

**7.** Procédé selon l'une des revendications 1 à 6, **caractérisé par le fait qu'**avant d'effectuer la détection, on augmente la conductibilité du liquide transporté par addition dans celui-ci de sels électriquement conducteurs ou éventuellement, on remplace le liquide transporté par un fluide conducteur.

**8.** Procédé selon l'une des revendications 1 à 7, **caractérisé par le fait que** la longueur du pas de déplacement de l'une des sondes par rapport à l'autre dans les étapes e) à g) est comprise entre environ 0,25 et environ 0,50 m, de préférence entre environ 0,10 et environ 0,20 m.

**9.** Procédé selon l'une des revendications 1 à 8, **caractérisé par le fait que** l'appareil permettant la mesure du signal émis entre les deux sondes potentiométriques est un galvanomètre.

**10.** Dispositif de détection sélective et de localisation de fuites comprenant :

- au moins une anode (5) implantée dans le milieu (2) rendant une canalisation (1) inaccessible,
- au moins une cathode (3),
- un générateur (4) de tension continue pulsée alimentant les électrodes (3,5) et reliée à un interrupteur,
- un système mobile de mesure comprenant deux sondes (7,8) potentiométriques constituant une bi-sonde et entre lesquelles est fixé un appareil (9) de visualisation et/ou de mesure d'un signal électrique émis entre les deux sondes potentiométriques, lesdites sondes qui peuvent être maintenues à une distance constante l'une de l'autre, étant des électrodes de référence telles que $Cu/CuSO_4$ ou $Ag/AgCl$.,

**caractérisé par le fait que** l'anode est plantée dans le sol et la cathode est maintenue en contact avec le liquide (L) transporté ou mis en place à l'intérieur de la canalisation présentant une fuite à détecter, ladite cathode étant placée à l'intérieur de la canalisation, à proximité et parallèlement à son axe longitudinal, ladite canalisation étant électriquement discontinue.

**Patentansprüche**

**1.** Verfahren zum selektiven Detektieren und Lokalisieren von Leckagen, die bei Kanalisationen (1) erzeugt werden, und die in nicht leitendem Material eingerichtet oder die elektrisch getrennt sind, wobei diese Kanalisationen unzugänglich und für den Transport von Flüssigkeiten (L) vorgesehen sind, ***dadurch gekennzeichnet, dass***:

a) man zwischen der transportierten oder fest platzierten Flüssigkeit und dem Mittel (2), das die Kanalisation unzugänglich macht, eine elektrische Gleichspannung mit impulsförmigem Feld anlegt,

b) man mittels sukzessiver Schritte an dem Mittel, das die Kanalisation unzugänglich macht, unter Verfolgung von näherungsweise der Längsachse der Kanalisation (1), eine potentiometrische Doppelsonde, gebildet aus zwei vorteilhafter Weise identischen potentiometrischen Sonden (7, 8) anordnet, wechselseitig bei einer nicht variablen Distanz gehalten, wobei diese bei jedem Schritt in Kontakt zu dem Mittel gelangen, das die Kanalisation unzugänglich macht, und

c) man bei jeder sukzessiven Position der Doppelsonde das elektrische Signal beobachtet und/oder misst, das zwischen den zwei Sonden, die diese bilden, emittiert wird, wobei

eine vorgegebene Leckage zwischen den zwei sukzessiven Positionen der Doppelsonde gegeben ist, zwischen denen man eine Inversion des emittierten Signals beobachtet.

2. Verfahren nach Anspruch 1, *dadurch gekennzeichnet, dass* bei Kenntnis der Positionen der Doppelsonde, zwischen denen eine Inversion des Signals erzeugt wird:

d) man die zwei Sonden (7, 8) zum Bilden der Doppelsonde aufspaltet, unter Beibehalten einer. derselben, fixiert an einer Position, die der Inversion des Signals vorausgeht, und unter Beibehaltung der anderen in einer Position nahe derjenigen, die sie nach der Inversion des Signals belegt,

e) man mittels sukzessiver Schritte eine der zwei Sonden bewegt, die dann in Richtung der anderen mobil ist, wobei diese letztere unbeweglich bleibt, und man bei jeder sukzessiven Position der mobilen Sonde das zwischen den zwei Sonden emittierte Signal beobachtet und/oder misst,

f) man die mobile Sonde in der Position fixiert, die der Beobachtung eines maximalen Signals vorausgeht,

g) man mittels sukzessiver Schritte die vorangehend fixiert gehaltene Sonde entlang einer Richtung der fixierten Sonde, vorausgehend mobil, versetzt, und man bei jeder sukzessiven Position dieser Sonde das emittierte Signal beobachtet und/oder misst, das ein Signal Null oder quasi Null durchquert,

h) man gegebenenfalls die Sonde, die bei der Etappe g) mobil war, in die Nähe der fixierten Sonde zurückführt, man dann diese von der fixierten Sonde mittels sukzessiver Schritte entfernt und man bei jeder sukzessiven Position der mobilen Sonde das emittierte Signal beobachtet und/oder misst, das ein Signal Null durchquert, wenn die zwei Sonden mit gleicher Distanz gegenüber der Leckage vorliegen.

3. Verfahren nach einem der Ansprüche 1 oder 2, *gekennzeichnet durch die Tatsache, dass* die Schritte·e) bis g) und/oder die Etappe h) auf der Querachse der Kanalisation reproduziert werden, wobei die zwei die Doppelsonde bildenden Sonden anfangs mit gleicher gegenseitiger Distanz gegenüber der Kanalisation vorliegen.

4. Verfahren nach einem der Ansprüche 1 bis 3, *gekennzeichnet durch die Tatsache, dass* die Doppelsonde mittels sukzessiver Schritte bewegt wird, deren Länge enthalten ist zwischen einer Halblänge und einer Länge der Einheitsröhre, vorzugsweise zwischen einem Drittel und einer Länge der Einheitsröhre, und noch weiter bevorzugt zwischen einem Viertel und einer Länge der Einheitsröhre.

5. Verfahren nach einem der Ansprüche 1 bis 4, *gekennzeichnet durch die Tatsache, dass* die elektrische Spannung, eingerichtet zwischen der transportierten oder fest platzierten Flüssigkeit und dem die Kanalisation unzugänglich machenden Mittel, enthalten ist zwischen ungefähr 2 und ungefähr 96 V, vorzugsweise zwischen ungefähr 4 und ungefähr 72 V, und noch weiter bevorzugt zwischen ungefähr 6 und ungefähr 48 V.

6. Verfahren nach einem der Ansprüche 1 bis 5, *gekennzeichnet durch die Tatsache, dass* man die Spannung mit impulsförmigen Feld mittels einem Gleichstromgenerator anlegt, dem ein periodischer symmetrischer oder asymmetrischer Schalter zugewiesen ist.

7. Verfahren nach einem der Ansprüche 1 bis 6, *gekennzeichnet durch die Tatsache, dass* man vor dem Ausführen der Detektion die Leitfähigkeit der transportierten Flüssigkeit erhöht, mittels Ergänzung von elektrisch leitenden Salzen in derselben, oder gegebenenfalls **durch** Ersetzen der transportierten Flüssigkeit mittels einem Leitungsfluid.

8. Verfahren nach einem der Ansprüche 1 bis 7, *gekennzeichnet durch die Tatsache, dass* die Länge des Schrittes zur Bewegung einer der Sonden im Hinblick auf die andere in den Etappen e) bis g) enthalten ist zwischen ungefähr 0,25 und ungefähr 0,50 m, vorzugsweise zwischen ungefähr 0,10 und ungefähr 0,20 m.

9. Verfahren nach einem der Ansprüche 1 bis 8, *gekennzeichnet durch die Tatsache, dass* das Gerät, das das Messen des zwischen den zwei potentiometrischen Sonden emittierten Signals gestattet, ein Galvanometer ist.

10. Einrichtung zum selektiven Detektieren und Lokalisieren von Leckagen, enthaltend:

   - zumindest eine Anode (5), implantiert in dem Mittel (2), das eine Kanalisation (1) unzugänglich macht,

   - zumindest eine Kathode (3),

   - einen Generator (4) für eine impulsförmige Gleichspannung zum Versorgen der Elektroden (3, 5) und verbunden mit einem Schalter,

   - ein mobiles Mess-System, enthaltend zwei potentiometrische Sonden (7, 8) zum Bilden einer Doppelsonde, zwischen denen ein Gerät (9) fixiert ist für die Anzeige und/oder das Messen eines elektrischen Signals, das zwischen den zwei potentiometrischen Sonden emittiert wird, wobei die Sonden mit einer konstanten Distanz gegenseitig gehalten werden können und Referenzelektroden sind, wie Cu/CuSO$_4$ oder Ag/AgCl,

   *gekennzeichnet durch die Tatsache, dass* die Anode im Boden angebracht ist und dass die Kathode in Kontakt mit der transportierten oder fest platzierten Flüssigkeit (L) gehalten ist, innerhalb der Kanalisation mit einer zu detektierenden Leckage, wobei die Kathode innerhalb der Kanalisation platziert ist, in der Nähe und parallel zu deren Längsachse, wobei die Kanalisation elektrisch angetrennt ist.


**Claims**

1. Method for the selective detection and location of leaks arising in conduits (1) which are constructed from non-conductive material or which are electrically discontinuous, these conduits being inaccessible and designed for transporting liquids (L), **characterised in that**:

   a) a continuous voltage pulsatory field is applied between the transported liquid or the liquid in place and the medium (2) rendering the said conduit inaccessible,
   b) on the medium rendering the said conduit inaccessible there is placed, in successive steps and following approximately the longitudinal axis of the said conduit (1), a potentiometric bi-probe comprising two potentiometric probes(7, 8) ideally identical, kept at an invariable distance from each other and which are at each step placed in contact with the medium rendering the said conduit inaccessible, and
   c) at each successive position of the bi-probe the electrical signal emitted between its two constituent probes is measured and/or observed,

   a given leak being located between the two successive positions of the bi-probe between which there is observed an inversion of the signal emitted.

2. Method according to claim 1, **characterised in that**, knowing the positions of the bi-probe between which an inversion of the signal is produced:

   d) the two probes (7, 8) comprising the bi-probe are separated by keeping one of them fixed in a position preceding the inversion of the signal and the other in a position close to that which it occupied after the inversion of the signal;
   e) one of the two probes is moved, thus becoming mobile, by successive steps towards the other, the latter remaining stationary, and at each successive position of the mobile probe the signal emitted between the two probes is measured and/or observed,
   f) the mobile probe is fixed in the position preceding that where a maximum signal is observed,
   g) the probe previously kept fixed is moved in successive steps in the direction of the fixed probe which was previously mobile and at each successive position of this probe the signal emitted which becomes non-existent or almost non-existent is measured and/or observed,
   h) if need be, the probe which was mobile at stage g) is moved close to the fixed probe, then the fixed probe is moved away in successive steps and at each successive position of the mobile probe the signal emitted, which becomes non-existent when the two probes are equidistant from the leak, is observed and/or measured.

3. Method according to one of claims 1 to 2, **characterised in that** stages e) to g) and/or stage h) are repeated on the transverse axis of the conduit, the two constituent probes of the bi-probe being initially placed at equal distances on either side of the said conduit.

4. Method according to one of claims 1 to 3, **characterised in that** the bi-probe is moved in successive steps, the length of which is between a half length and a length of a pipe unit, preferably between a third and a length of a pipe unit, and still more preferably between a quarter and a length of a pipe unit.

5. Method according to one of claims 1 to 4, **characterised in that** the voltage established between the transported liquid or the liquid in place and the medium rendering the conduit inaccessible is between about 2 and about 96V, preferably between about 4 and about 72V, and more preferably still between about 6 and about 48V.

6. Method according to one of claims 1 to 5, **characterised in that** the pulsatory field voltage is applied by means of a continuous current generator to which is linked a symmetrical or asymmetrical cyclic switch.

7. Method according to one of claims 1 to 6, **characterised in that** prior to carrying out the observation the conductivity of the transported liquid is increased by the addition of electrically conductive salts or, if need be, the transported liquid is replaced by a conductive liquid.

8. Method according to one of claims 1 to 7, **characterised in that** the distance by which one of the probes is moved from the other in stages e) to g) is between about 0.25 and about 0.50m, preferably between about 0.10 and about 0.20m.

9. Method according to one of claims 1 to 8, **characterised in that** the device which allows for measurement of the signal emitted between the two potentiometric probes is a galvanometer.

10. Device for the selective detection and location of leaks comprising:

   - at least one anode (5) introduced into the medium (2) rendering a conduit (1) inaccessible,
   - at least one cathode (3)
   - a continuous pulsatory voltage generator (4) feeding the electrodes (3, 5) and linked to a switch
   - a mobile measuring system comprising two potentiometric probes (7, 8) forming a bi-probe and between which there is placed a device (9) for observing and/or measuring an electrical signal emitted between the two potentiometric probes, the said probes, which can be maintained at a constant distance from each other, being reference electrodes such as $Cu/CuSO_4$ or Ag/AgCl.,

   **characterised in that** the anode is placed in the ground and the cathode is kept in contact with the transported liquid (L) or the liquid in place inside the conduit presenting a leak for detection, the said cathode being placed inside the conduit, close by and parallel to its longitudinal axis, the said conduit being electrically discontinuous.

FIG.1.

FIG.2.

FIG.3.

FIG.4a.

FIG.4b.

FIG.4c.

FIG.4d.

FIG.5a.

FIG.5b.

FIG.5c.

FIG.5d.